**Europäisches Patentamt**

**European Patent Office**

**Office européen des brevets**

(19)

(11) Veröffentlichungsnummer: **0 022 163**

**A1**

(12)

# EUROPÄISCHE PATENTANMELDUNG

(21) Anmeldenummer: **80102842.4**

(22) Anmeldetag: **22.05.80**

(51) Int. Cl.³: **H 04 Q 3/54**
**H 04 Q 3/62**

(30) Priorität: **05.07.79 CH 6285 79**

(43) Veröffentlichungstag der Anmeldung:
**14.01.81 Patentblatt 81 2**

(84) Benannte Vertragsstaaten:
**NL**

(71) Anmelder: **SIEMENS-ALBIS AKTIENGESELLSCHAFT**
**EGA1 Verträge und Patente Postfach**
**CH-8047 Zürich(CH)**

(72) Erfinder: **Süess, Hans-Peter**
**Birkenstrasse 11**
**CH-8134 Adliswil(CH)**

(72) Erfinder: **Hardegger, André**
**Zielackerstrasse 37**
**CH-8048 Zürich(CH)**

(54) **Schaltungsanordnung für eine Fernmelde-, insbesondere Fernsprechvermittlungsanlage mit Verbindungssätzen für unterschiedliche Zeichengabeverfahren.**

(57) Die Schaltungsanordnung weist eine Satzmerkmalliste (SML) sowie eine Zeichenliste (ZEL) auf. In der Satzmerkmalliste (SML) sind für jede Anschaltestelle von Verbindungssätzen charakteristische Daten für die Art der jeweils vom Verbindungssatz abgehenden Leitung (AL) eingespeichert, während in der Zeichenliste (ZEL) für jede Leitungsart zum Aussenden von Zeichen nach dem entsprechenden Zeichengabeverfahren erforderliche Daten enthalten sind. Die zum Aussenden eines Zeichens nach einem bestimmten Verfahren erforderlichen Daten werden jeweils aus den beiden Listen (SML, ZEL) ermittelt und in eine Zeichenbearbeitungsliste (ZBL) überführt, aufbereitet und einer Einstelliste (ENL) zugeführt, deren Inhalt zur An- bzw. Abschaltung der die gewünschte Zeichengabe veranlassenden Einrichtungen (A,B...K) an die betreffende Leitung (AL) herangezogen wird. Bei einer Aenderung der Leitungsart an einer Anschaltestelle ist in vorteilhafter Weise nur eine Aenderung der entsprechenden Daten in der Satzmerkmalliste (SML) notwendig. Ebenso ist bei Aenderungen des Zeichengabeverfahrens lediglich eine entsprechende Aenderung in der Zeichenliste (ZEL) erforderlich.

EP 0 022 163 A1

./...

FIG.2

SIEMENS-ALBIS AKTIENGESELLSCHAFT

Zürich

Unser Zeichen

79P9813

Schaltungsanordnung für eine Fernmelde-, insbesondere Fernsprechvermittlungsanlage mit Verbindungssätzen für unterschiedliche
Zeichengabeverfahren

Die vorliegende Erfindung betrifft eine Schaltungsanordnung
für eine Fernmelde-, insbesondere Fernsprechvermittlungsanlage mit durch
ein gemeinsames Steuerwerk gesteuerten Verbindungssätzen, denen zur Abwicklung von Verkehr mit Anlagen mit unterschiedlichen Zeichengabeverfahren Leitungen verschiedener Art zugeordnet sind, wobei zum Aufbau
einer abgehenden Verbindung erforderliche Informationen über das genannte Steuerwerk zum entsprechenden Verbindungssatz und von dort auf
die zugeordnete Leitung gelangen.

Dadurch, dass in einer solchen Fernsprechvermittlungsanlage
der Aufbau von Verbindungen zu anderen Anlagen mit unterschiedlicher
Wahlart bzw. Zeichengabe möglich sein soll, sind bei den Verbindungssätzen auf der Fernleitungsseite Möglichkeiten zur Anpassung an verschiedene Leitungsarten mit unterschiedlichen Signalisierungsverfahren
und gegebenenfalls an bestimmte Eigenschaften der Gegenvermittlungsstelle vorzusehen. Bei einer Vielzahl von möglichen Arten von Leitungen,
die durch die jeweils Verwendung findende Signalisierungsart gekennzeichnet sind und die wahlweise an einer beliebigen der in Frage kommenden Anschaltestellen betrieben werden sollen, ist es durch rein schaltungstechnische Massnahmen kaum mehr möglich, mit einem vernünftigen
Aufwand dafür zu sorgen, dass die Anlage im Zuge eines Verbindungsaufbaus selbsttätig die Art der von einer bestimmten Anschaltestelle abgehenden Leitung feststellen kann.

Der vorliegenden Erfindung liegt die Aufgabe zugrunde, eine
solche Feststellung in einfacher Weise zu ermöglichen und damit auch
zu gewährleisten, dass Verbindungssätze mit verschiedenartigen Leitungen
nach Bedarf an beliebigen Anschaltestellen eingesetzt bzw. beliebig ausgetauscht werden können. Die Lösung dieser Aufgabe gelingt mit einer
Anordnung, wie sie in den Ansprüchen gekennzeichnet ist.

0022163

Mit der Erfindung genügt es, bei einer Aenderung der Leitungsart an einer bestimmten Anschaltestelle die in der Satzmerkmalliste eingespeicherten, die Art der angeschlossenen Leitung kennzeichnenden Daten
zu ändern. Spezielle schaltungstechnische Eingriffe sind dabei nicht erforderlich. Im Falle der Einführung neuer Signalisierungsverfahren genügt es, die Zeichenliste mit entsprechenden Daten zu ergänzen. Die erfindungsgemässe Anordnung ermöglicht überdies in einer programmgesteuerten Anlage, dass die Programmierung des Ablaufs im die Verbindungssätze
steuernden Steuerwerk unabhängig von der Art der an den Anschaltestellen
angeschlossenen Leitungen erfolgen kann.

Nachfolgend wird die Erfindung anhand einer Zeichnung beispielsweise näher erläutert. Es zeigt:

Fig. 1 das Blockschaltbild einer Fernsprechnebenstellenanlage, in der die Erfindung Verwendung findet,

Fig. 2 Einzelheiten des zur Steuerung von Verbindungssätzen
in dieser Nebenstellenanlage vorgesehenen Teilsteuerwerks.

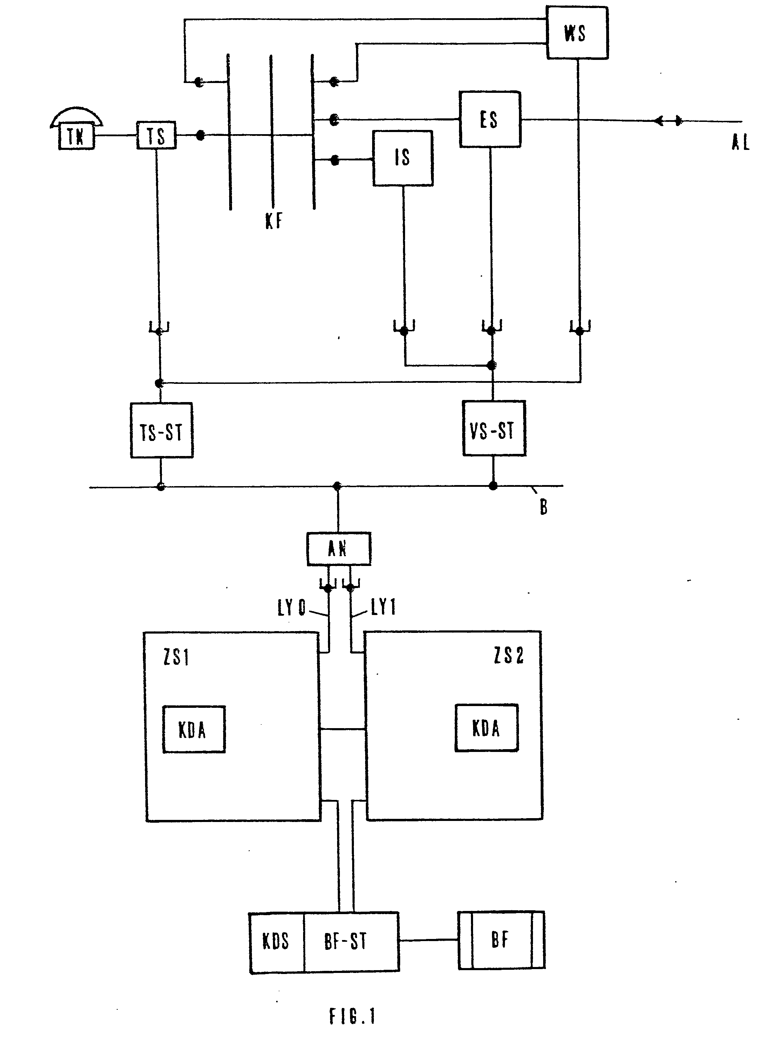

In der in Fig. 1 nur in ihren im Zusammenhang mit der Erfindung interessierenden Einheiten dargestellten zentralgesteuerten Fernsprechnebenstellenanlage sind die Teilnehmerstellen TN, von denen nur
eine gezeigt ist, zu Teilnehmergruppen zusammengefasst und jeder Teilnehmergruppe auch jeweils eine eigene Gruppe von Verbindungssätzen und
eine Gruppe von Wahlaufnahmesätzen zugeordnet. Dabei können die Verbindungssätze und Wahlaufnahmesätze der dargestellten Gruppe selbstverständlich in einer anderen Gruppe mit aushelfen. Jeder Teilnehmergruppe
sind neben einer Gruppe von Internsätzen, von denen einer mit der Bezeichnung IS dargestellt ist, beispielsweise eine Gruppe von Externsätzen, von denen nur einer mit der Bezeichnung ES dargestellt ist und
beispielsweise mehrere Wahlaufnahmesätze, von denen einer mit der Bezeichnung WS gezeigt ist, zugeordnet. Jede andere Teilnehmergruppe hat
ebenfalls eine Anzahl von Intern- und Externsätzen sowie Wahlaufnahmesätzen, wobei die Anzahl abhängig ist vom Verkehrswert. Die Teilnehmerschaltungen TS einer Teilnehmergruppe sind über Anschalteleitungen mit
einer Teilsteuerung TS-ST für Teilnehmerschaltungen TS verbindbar. Dieser
Teilsteuerung TS-ST für Teilnehmerschaltungen TS sind Schaltmittel zugeordnet, die durch zyklische Abtastung feststellen, ob sich der Schaltzustand der Teilnehmerschaltung TS, die gerade abgefragt wird, geändert

00022163

hat oder nicht. Ist eine Aenderung eingetreten und ein Vermittlungsvorgang vorzunehmen, so wird über ein der Teilnehmergruppe zugeordnetes Datenübertragungsleitungsbündel B ein Informationsaustausch mit dem zentralen Steuerwerk ZS1 vorgenommen. Das Datenübertragungsleitungsbündel B ist für die codierte Weitergabe von Informationen jeglicher Art vorgesehen.

Das zweite dargestellte zentrale Steuerwerk ZS2 ist als Ersatzsteuerwerk vorgesehen, das entweder alternierend mit dem Steuerwerk ZS1 oder aber nur im Falle einer Störung des zentralen Steuerwerkes ZS1 zum Einsatz gelangt, so dass im folgenden nur die Vorgänge im Zusammenhang mit einem der beiden zentralen Steuerwerke, hier mit dem zentralen Steuerwerk ZS1, beschrieben werden. Ob das Datenübertragungsleitungsbündel B mit dem zentralen Steuerwerk ZS1 zwecks Informationsaustausch und Befehlsaustausch zwischen der Teilsteuerung TS-ST und dem zentralen Steuerwerk ZS1 durch Aktivierung entsprechender Adern des Datenübertragungsbündels B im Rahmen eines Abtastzyklus seitens des zentralen Steuerwerkes ZS1 über die Zuteil- und Anschalteeinrichtung AN und die Datenübertragungsleitungen LY verbunden wird, hängt von der Art des vorzunehmenden Vermittlungsvorganges und seiner Prioritätseinordnung im Ablauf der anderen Vermittlungsvorgänge ab.

Unter Externsätzen ES sind Verbindungssätze zu verstehen, über die diejenigen Verbindungen führen, die von Teilnehmern der Nebenstellenanlage zu Teilnehmern anderer Anlagen führen, also beispielsweise Amtsverbindungen oder zu anderen Nebenstellenanlagen führende Querverbindungen. In der gezeigten Teilnehmergruppe ist diesen Externsätzen ES eine gemeinsame Teilsteuerung VS-ST zugeordnet, die im übrigen auch die Internsätze IS steuert. Auch bei dieser Teilsteuerung VS-ST findet bei Vorliegen von Zustandsveränderungen, die in einem Last-look-Verfahren festgestellt werden, bei dem auch hier die angeschlossenen Verbindungssätze nacheinander von der Teilsteuerung abgetastet werden, ein Informationsaustausch mit dem zentralen Steuerwerk ZS1 statt. Der dargestellte Wahlaufnahmesatz WS ist zur Aufnahme von Wahlinformationen über ein Koppelnetzwerk KF mit einer Teilnehmerschaltung TS oder einem Verbindungssatz verbindbar. Die Steuerung der Wahlaufnahmesätze WS erfolgt über das Teilsteuerwerk TS-ST. Je nach Bedarf können Wahlaufnahmesätze WS für Impulswahl und Mehrfrequenzcodewahl vorgesehen sein, wobei letztere zur Aufnahme und Codeumsetzung der Wahlkennzeichen ausgebildet sind.

Der eigentliche Erfindungsgedanke wird anhand eines in dieser Nebenstellenanlage ablaufenden Aufbaus einer externen, also zu einer anderen Vermittlung führenden Verbindung, aufgezeigt. Der angerufene Teilnehmer ist demnach ein externer Teilnehmer, d.h. er gehört nicht dieser Nebenstellenanlage an, sondern er ist ein Teilnehmer einer anderen Nebenstellenanlage oder des öffentlichen Fernsprechnetzes. Hebt ein Teilnehmer TN der Nebenstellenanlage seinen Handapparat ab, erzeugt er in seiner Teilnehmerschleife eine Stromänderung, die von der Teilnehmersteuerung TS-ST im Laufe der erwähnten zyklischen Abfrage festgestellt wird. Die Teilnehmersteuerung TS-ST meldet dem zentralen Steuerwerk ZS über das Datenübertragungsleitungsbündel B die festgestellte Neubelegung. Hierauf sucht das zentrale Steuerwerk ZS einen freien Wahlaufnahmesatz WS sowie einen freien Weg im Koppelnetzwerk KF, über den dann der rufende Teilnehmer TN mit dem freien Wahlaufnahmesatz WS verbunden wird. Der Teilnehmer TN erhält hierauf das Wahlaufforderungszeichen. Die erste vom Teilnehmer TN abgegebene Wahlziffer wird vom Wahlaufnahmesatz WS empfangen und über die Teilnehmersteuerung TS-ST und das Leitungsbündel B dem zentralen Steuerwerk ZS zugeführt, wo eine Bewertung stattfindet. Aufgrund der im Falle einer Externverbindung vom Teilnehmer TN als erste Wahlziffer abgegebenen Kennziffer erkennt das zentrale Steuerwerk ZS den Wunsch nach einer externen Verbindung und sucht dementsprechend einen freien Externsatz ES. Der Teilnehmer TN erhält erneut ein Wahlaufforderungssignal und kann nun die übrigen Wahlziffern aussenden. Nach erfolgter Bewertung im zentralen Steuerwerk ZS werden die Ziffern an die Teilsteuerung VS-ST weitergeleitet und dort eingespeichert, um dann über eine abgehende Leitung AL an eine Gegenvermittlungsstelle abgegeben zu werden, und zwar nach dem dieser Leitung zugeordneten Zeichengabeverfahren.

Wie erwähnt, steuert die Teilsteuerung VS-ST u.a. diejenigen Verbindungssätze, über die ein Zugang zu Gegenvermittlungsstellen möglich ist. Im Falle einer Verbindung zum öffentlichen Fernsprechnetz handelt es sich dabei um Amtsverbindungssätze; im Falle von Verkehr zu anderen Nebenstellenanlagen um Querverbindungssätze. Welche Art von Externsätzen jeweils zu belegen ist, wird durch die vom wählenden Teilnehmer abgegebene Kennziffer bestimmt. An diese Arten von Externsätzen können nur

verschiedene Arten von Leitungen angeschlossen sein, die sich durch
unterschiedliche Signalisierungsverfahren unterscheiden. So ist bekanntlich der Austausch von Belegungs-, Wähl-, Zustands- und Auslösekennzeichen auf solchen Leitungen mit Gleichstromzeichen wie auch mit Wechselstromsignalen oder nach dem Induktivwahlverfahren denkbar. Je nach den
diesbezüglichen Eigenschaften der betreffenden Gegenvermittlungsstelle
kommt das eine oder andere Verfahren zum Zug.

Die beschriebene Fernsprechnebenstellenanlage weise eine bestimmte Anzahl von Anschaltestellen für Externsätze ES auf. Je nach den
Erfordernissen sind diese Externsätze ES für eine von verschiedenen Leitungsarten vorgesehen. Im Interesse einer möglichst grossen Flexibilität
der Anlage soll die an einer Anschaltestelle vorgesehene Leitungsart
jedoch beliebig geändert werden können, ohne dass dazu weitere spezielle
schaltungstechnische Eingriffe notwendig sind. Mit anderen Worten: Die
erwähnten, im Zuge eines Verbindungsaufbaus in der Teilsteuerung VS-ST
eingespeicherten Wahlinformationen sollen selbsttätig entsprechend der
am belegten Verbindungssatz jeweils angeschlossenen Leitungsart nach
dem für diese Leitungsart festgelegten Signalisierungsverfahren auf die
abgehende Leitung gelangen können.

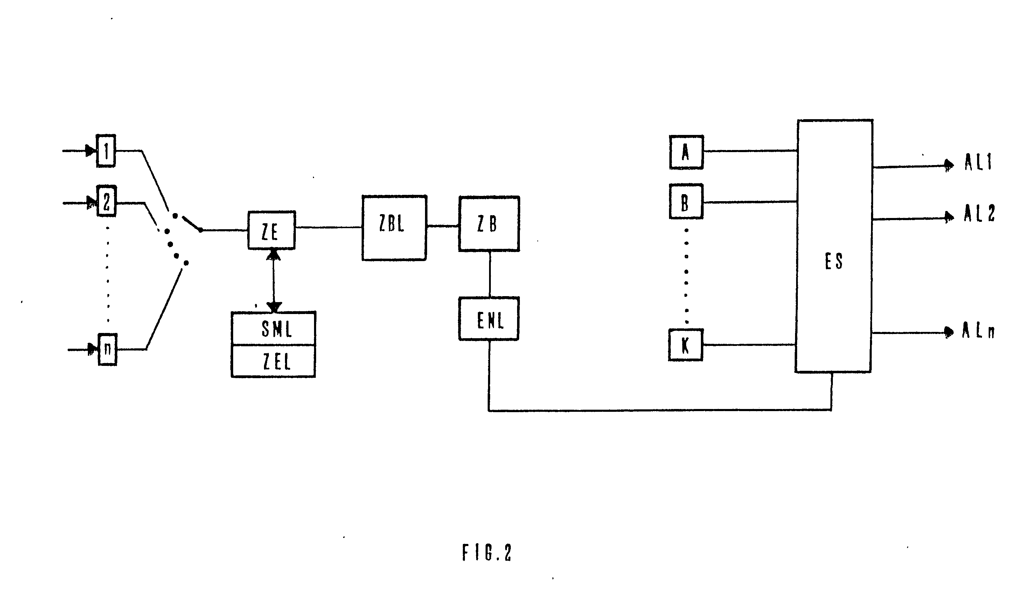

Die vom anrufenden Teilnehmer TN abgegebenen Informationen
werden in einem bestimmten Code in der Teilsteuerung VS-ST eingespeichert. Die Teilsteuerung VS-ST steht in ständigem Meldungsaustausch mit
dem zentralen Steuerwerk ZS. Die Aufgaben, die sie in einer vorgegebenen
Zykluszeit erledigen muss, sind u.a. die Abfrage von Indikationsstellen
in den Verbindungssätzen sowie die Verarbeitung dabei ermittelter Anreize, die Aufbereitung von in Richtung einer Gegenvermittlungsstelle
auszusendenden Signalisierungszeichen, die Ueberwachung und Bearbeitung
von im Zusammenhang mit der Signalisierung massgebenden Zeitgliedern
sowie die Erarbeitung von Informationen, die in den Externsätzen ES zur
Anschaltung der die jeweils erforderliche Signalisierung veranlassenden
Einrichtungen dienen. In Fig. 2 sind diejenigen Einheiten der Teilsteuerung VS-ST gezeigt, die im Rahmen der erfindungsgemässen Lösung von Bedeutung sind.

Jedem Externsatz ES ist ein Uebergabespeicher USP (1,2...n)
zugeordnet. Der Inhalt dieser Uebergabespeicher USP ist durch eine Zeicheneintragung ZE abfragbar. Die Zeicheneintragung ZE hat Zugriff zu einer Zeichenliste ZEL sowie einer Satzmerkmalliste SML. Die beiden Listen sind als Schreib-/Lesespeicher ausgebildet. Die Satzmerkmalliste SML besteht im Falle der genannten zwei Arten von Externsätzen (für Amts- bzw. Querverbindungsverkehr) aus zwei Teilen. Im ersten Teil ist für jede der für Amtsverbindungssätze vorgesehenen Anschaltestellen eine Information darüber eingespeichert, mit was für einer Leitungsart der betreffende Verbindungssatz verbunden ist. Im zweiten Teil der Liste sind entsprechende Informationen für die Anschaltestellen von Querverbindungssätzen enthalten. Selbstverständlich kann diese Liste dahingehend erweitert werden, dass bei Bedarf weitere Teile für andere Arten von Verbindungssätzen vorgesehen werden. Die Eingabe bzw. Aenderung dieser satz- und leitungsspezifischen Informationen erfolgt über ein Bedienungsfeld BF (Fig. 1) mit zugehöriger Teilsteuerung BF-ST in einen Kundendatenspeicher KDS. Beim Hochfahren der Vermittlungsanlage werden die im Kundendatenspeicher KDS enthaltenen Informationen in einen Kundendatenarbeitsspeicher KDA des zentralen Steuerwerkes ZS überführt und von dort     der Satzmerkmalliste SML in der Teilsteuerung VS-ST zugeführt. Auch bei der Umschaltung des Betriebes vom einen Steuerwerk ZS1 zum anderen Steuerwerk ZS2 erfolgt selbsttätig eine Ueberführung der genannten Informationen in die Satzmerkmalliste SML.

In der Zeichenliste ZEL sind für jede mögliche Leitungsart Informationen enthalten, die die zugeordnete Signalisierungsart charakterisieren und die zur Erzeugung von Zeichen nach diesem Signalisierungsverfahren notwendig sind. Diese für jedes Zeichen eingespeicherten Informationen beinhalten im wesentlichen Angaben über den weiteren Verarbeitungsmodus sowie eine Kennung für bei der Signalisierung gegebenenfalls erforderliche Zeitglieder. Der Eintrag von Daten in die Zeichenliste ZEL kann ebenfalls über das Bedienungsfeld BF erfolgen.

Die Zeicheneintragung ZE ist ferner mit einer Zeichenbearbeitungsliste ZBL verbunden, die ihrerseits über eine Zeichenbearbeitung ZB mit einer Einstelliste ENL verbunden ist. Die Zeicheneintragung ZE dient dem Eintrag der zur Aussendung von Zeichen nach dem jeweils erforderlichen Verfahren notwendigen Informationen in die Zeichenbearbeitungsliste ZBL, von wo die Informationen von der Zeichenbearbeitung ZB übernommen, ausgewertet und in die Einstelliste ENL überführt werden.

0022163

Nach Aufnahme des Vermittlungsbetriebes der Nebenstellenanlage wird die Zeicheneintragung ZE periodisch aufgerufen. Sie frägt hierauf zyklisch aufeinanderfolgend die Uebergabespeicher USP nach ihrem Inhalt ab. In der Teilsteuerung VS-ST zwecks Abgabe auf eine abgehende Leitung eingespeicherte Signalisierinformationen gelangen nacheinander in einem bestimmten Zeichencode in den dem betreffenden Externsatz ES zugeordneten Uebergabespeicher USP. Eine Signalisierinformation enthält neben dem Zeichencode für die auszusendenden Signalisierzeichen noch eine Angabe über die Art (z.B. Amts- oder Querverbindungssatz) des belegten Verbindungssatzes sowie die Nummer von dessen Anschaltestelle. Aufgrund dieser Angaben ermittelt die Zeicheneintragung ZE aus der Satzmerkmalliste SML die Art der von diesem Verbindungssatz abgehenden Leitung. Nach Feststellung der Leitungsart ermittelt die Zeicheneintragung ZE mit Hilfe der Zeichenliste ZEL die Daten, die zum Aussenden des anstehenden Zeichens nach dem dieser Leitungsart entsprechenden Signalisierungsverfahren notwendig sind. Diese Daten werden im entsprechenden Speicherplatz der Zeichenbearbeitungsliste ZBL, in der jedem Externsatz ES ein Speicherplatz zugeordnet ist, eingeschrieben. Das Einschreiben von Daten in einen Speicherplatz der Zeichenbearbeitungsliste ZBL ist nur möglich, wenn dieser Speicherplatz leer ist. Die Löschung des Inhalts eines Speicherplatzes erfolgt jeweils nachdem die Aussendung eines Zeichens beendet ist. Die in der Zeichenbearbeitungsliste ZBL enthaltenen Daten werden durch die Zeichenbearbeitung ZB ausgewertet, d.h. die Zeichenbearbeitung ZB formt die Daten unter Berücksichtigung gegebenenfalls massgebender Zeitglieder um, um sie dann in die Einstellliste ENL einzutragen. Die Einstelliste ENL enthält für jede Anschaltestelle einen aus mehreren Bitstellen bestehenden Speicherplatz. Jede dieser Bitstellen ist einer wahlweise an die abgehenden Leitungen AL anschaltbaren, für die Erzeugung der verschiedenartigen Signalisierzeichen (Gleichstrom-, Wechselstromsignalisierung, Induktivwahl) notwendigen Einrichtung (A,B...K) zugeordnet. Ueber einen Einsteller ES wird dann aufgrund des Inhalts einer Bitstelle die betreffende Einrichtung an- bzw. abgeschaltet.

Was die Arbeitsweise der Zeicheneintragung ZE und der Zeichenbearbeitung ZB anbetrifft, ist noch zu bemerken, dass diese Einheiten innerhalb der erwähnten Zykluszeit der Teilsteuerung VS-ST jeweils einmal aufgerufen werden und hierauf für alle Anschaltestellen aufeinanderfolgend die beschriebenen Eintragungen bzw. Bearbeitungen vornehmen.
Ebenfalls innerhalb dieser Zykluszeit werden die Speicherplätze sämtlicher Anschaltestellen in der Einstelliste ENL aufeinanderfolgend abgefragt und aufgrund des Inhalts der Bitstellen die An- bzw. Abschaltung
der erwähnten Einrichtungen veranlasst.

0022163

79P9813

Patentansprüche

1. Schaltungsanordnung für eine Fernmelde-, insbesondere Fernsprechvermittlungsanlage mit durch ein gemeinsames Steuerwerk gesteuerten Verbindungssätzen, denen zur Abwicklung von Verkehr mit Anlagen mit unterschiedlichen Zeichengabeverfahren Leitungen verschiedener Art zugeordnet sind, wobei zum Aufbau einer abgehenden Verbindung erforderliche Zeichen über das genannte Steuerwerk zum entsprechenden Verbindungssatz und von dort auf die zugeordnete Leitung gelangen, dadurch gekennzeichnet, dass eine Satzmerkmalliste (SML) vorgesehen ist, in der für jede Anschaltestelle eines Verbindungssatzes (VS) charakteristische Daten für die Art der von diesem Verbindungssatz (VS) abgehenden Leitung (AL) eingespeichert sind, dass im weiteren eine Zeichenliste (ZEL) vorhanden ist, in der für jede Leitungsart zum Aussenden der in das Steuerwerk (VS-ST) gelangenden Zeichen nach dem entsprechenden Zeichengabeverfahren erforderliche Daten eingespeichert sind, und dass ferner eine Zeichenbearbeitungsliste (ZBL) vorgesehen ist, in die die jeweils im Zuge eines Verbindungsaufbaus mit Hilfe der beiden genannten Listen (SML, ZEL) für jedes auszusendende Zeichen ermittelten Daten zusammengeführt werden, um dann ausgewertet und in eine Einstelliste (ENL) eingeschrieben zu werden, deren Inhalt zur An- bzw. Abschaltung der die entsprechende Zeichengabe veranlassenden Einrichtungen (A,B...K) an die betreffende Leitung herangezogen wird.

2. Schaltungsanordnung nach Anspruch 1, dadurch gekennzeichnet, dass die Eingabe der für die angeschlossenen Leitungen charakteristischen Daten über ein Bedienungsfeld (BF) in einen Kundendatenspeicher (KDS) erfolgt, von wo sie jeweils wenigstens beim Hochfahren der Vermittlungsanlage selbsttätig in die entsprechende Liste (SML, ZEL) übertragen werden.

FIG.1

FIG.2

79Pg013
0022163

Europäisches
Patentamt

**EUROPÄISCHER RECHERCHENBERICHT**

Nummer der Anmeldung

EP 80 10 2842

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| | INTERNATIONAL CONFERENCE ON PRIVATE ELECTRONIC SWITCHING SYSTEMS, 10. - 12. April 1978, Seiten 169-172 London, G.B. A.J. BARR et al.: "An application of microprocessors to a private automatic branch exchange" <br><br> * Seite 169, linke Spalte, Zeilen 13-26; rechte Spalte, Zeilen 12-20 * <br><br> -- | 1 | H 04 Q 3/54 3/62 |
| | NACHRICHTENTECH. ZEITSCHRIFT, Band 29, Nr. 8, August 1976, Seiten 585/591 Berlin, DE. R. ADLER: "EWSF - die Fernwähltechnik im Elektronischen Fernsprech-Wählsystem der Deutschen Bundespost" <br><br> * Seite 589, rechte Spalte, Zeile 19 - Seite 590, linke Spalte, Zeile 57; Figur 6 * <br><br> -- | 1 | RECHERCHIERTE SACHGEBIETE (Int. Cl.³) <br><br> H 04 Q |
| | US - A - 4 138 599 (MUNTER) <br><br> * Spalte 2, Zeilen 33-42 * <br><br> -- | 1 | |
| P | DE - A - 2 813 999 (SIEMENS) <br><br> * Seite 4, Zeilen 5-28; Seite 12, Zeile 29 - Seite 13, Zeile 4 * <br><br> ---- | 1,2 | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 07-10-1980 | VANDEVENNE |

EPA form 1503.1  06.78